# EUROPEAN PATENT APPLICATION

(11) **EP 4 757 448 A1**
(43) Date of publication of application: **10.06.2026**
(21) Application number: 24850836.8
(22) Date of filing: 29.07.2024
(51) Int. Cl.: H04W 68/02

(54) **COMMUNICATION METHOD, RELATED APPARATUS, STORAGE MEDIUM, AND COMPUTER PROGRAM PRODUCT**

(30) Priority: 08.08.2023 CN 202310995974
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100053 (CN); WEI, Bin, Beijing 100053 (CN)
(74) Representative: J A Kemp LLP
(86) International application number: PCT/CN2024/108139
(87) International publication number: WO 2025/031188

(57) **Abstract**

Disclosed in embodiments of the present application are a communication method, a related apparatus, a storage medium, and a computer program product. The communication method is applied to an access and mobility management function (AMF) and comprises: receiving downlink data length information corresponding to a quality of service flow and sent by a session management function (SMF); and sending the downlink data length information to a wireless access network device, wherein the radio access network device is configured to determine, on the basis of the downlink data length information, whether to enable a mobile-terminated small data transmission (MT-SDT) radio bearer, and/or determine whether to send to a terminal device a paging message carrying indication information for indicating the MT-SDT radio bearer.

## Description

### CROSS-REFERENCE TO RELATED APPLICATION

This application is based on and claims priority to Chinese Patent Application No. 202310995974.7, filed on August 8, 2023 and entitled "Communication Method and Related Apparatus, and Storage Medium", the contents of which are hereby incorporated by reference in its entirety.

### TECHNICAL FIELD

Embodiments of the present disclosure relate to the technical field of communications, and more particularly to a communication method and related apparatus, a storage medium, and a computer program product.

### BACKGROUND

Small data transmission (SDT) is a procedure that allows data or signaling transmission in a radio resource control inactive state (RRC Inactive). The SDT is configured based on a granularity of a radio bearer, and a radio access network device may configure a SDT radio bearer during an air interface resource release phase when user equipment (UE) enters RRC Inactive.

At present, the network side may activate a downlink SDT radio bearer at an inappropriate time, resulting in poor data transmission effect.

### SUMMARY

Embodiments of the present disclosure provide a communication method, a related apparatus, a storage medium, and a computer program product, which improve the flexibility and accuracy of activating an MT-SDT radio bearer, thereby improving the data transmission effect.

The technical solutions of the embodiments of the present disclosure are realized as follows.

An embodiment of the present disclosure provides a communication method, which is applied to an access and mobility management function (AMF), and the method includes that:
downlink data size information corresponding to a quality of service flow transmitted by a session management function (SMF) is received; and
the downlink data size information is transmitted to a radio access network device.

The radio access network device is configured to determine, based on the downlink data size information, whether to activate a mobile terminated-small data transmission (MT-SDT) radio bearer, and/or whether to send a paging message carrying indication information for indicating the MT-SDT radio bearer to user equipment (UE).

In the above method, before receiving the downlink data size information corresponding to the quality of service flow transmitted by the SMF, the method further includes that:
a timer duration is transmitted to the SMF based on an extended discontinuous reception (eDRX) parameter when the UE is unreachable, where the SMF is configured to obtain the downlink data size information and transmit the downlink data size information to the AMF when a timer expires.

In the above method, before receiving the downlink data size information corresponding to the quality of service flow transmitted by the SMF, the method further includes:
the downlink data size information is requested from the SMF when the UE is reachable, where the SMF is configured to obtain the downlink data size information.

In the above method, the operation of transmitting the downlink data size information corresponding to the quality of service flow to the radio access network device includes:
an N2 message carrying the downlink data size information is transmitted to the radio access network device.

The above method further includes that:
a downlink data size threshold is transmitted to the radio access network device;
where the radio access network device is further configured to determine, based on the downlink data size threshold and/or the downlink data size information, whether to activate an MT-SDT radio bearer, and/or whether to transmit the paging message to the UE.

An embodiment of the present disclosure provides a communication method, which is applied to a SMF, and the method includes that:
downlink data size information corresponding to a quality of service flow is transmitted to an AMF, and the downlink data size information is transmitted to a radio access network device through the AMF;
where the radio access network device is configured to determine, based on the downlink data size information, whether to activate an MT-SDT radio bearer, and/or whether to send a paging message carrying indication information for indicating an MT-SDT radio bearer to the UE.

In the above method, the operation of transmitting the downlink data size information corresponding to the quality of service flow to the AMF includes that:
a timer duration transmitted by the AMF is received; and
when a timer expires, the downlink data size information is obtained and transmitted to the AMF.

In the above method, the operation of transmitting the downlink data size information corresponding to the quality of service flow to the AMF includes:
according to a request from the AMF, the downlink data size information is obtained and transmitted to the AMF.

In the above method, the operation of obtaining the downlink data size information includes:
when downlink data is cached in the SMF, the SMF determines the downlink data size information.

In the above method, the operation of obtaining the downlink data size information includes:
when downlink data is cached in a user plane function (UPF), the downlink data size information is requested from the UPF.

An embodiment of the present disclosure provides a communication method, which is applied to a radio access network device, and the method includes that:
downlink data size information corresponding to a quality of service flow transmitted by an AMF is received; and
based on the downlink data size information, it is determined whether to activate an MT-SDT radio bearer, and/or whether to send a paging message carrying indication information for indicating an MT-SDT radio bearer to a UE.

The above method further includes that:
a downlink data size threshold transmitted by the AMF is received; and
it is determined, based on the downlink data size threshold and/or the downlink data size information, whether to activate an MT-SDT radio bearer, and/or whether to send the paging message to the UE.

An embodiment of the present disclosure provides an AMF, which includes:
a first receiving module, configured to receive downlink data size information corresponding to a quality of service flow transmitted by a SMF; and
a first transmitting module, configured to transmit the downlink data size information to a radio access network device;
where the radio access network device is configured to determine, based on the downlink data size information, whether to activate a mobile terminated-small data transmission (MT-SDT) radio bearer, and/or determine whether to send a paging message carrying indication information for indicating the MT-SDT radio bearer to the UE.

An embodiment of the present disclosure provides an SMF, which includes:
a second transmitting module, configured to transmit downlink data size information corresponding to a quality of service flow to an AMF, and transmit the downlink data size information to a radio access network device through the AMF;
where the radio access network device is configured to determine, based on the downlink data size information, whether to activate an MT-SDT radio bearer, and/or whether to send a paging message carrying indication information for indicating an MT-SDT radio bearer to a UE.

An embodiment of the present disclosure provides a wireless access network device, which includes:
a second receiving module, configured to receive downlink data size information corresponding to a quality of service flow transmitted by an AMF;
a processing module, configured to determine, based on the downlink data size information, whether to activate an MT-SDT radio bearer and/or whether to send a paging message carrying indication information for indicating an MT-SDT radio bearer to a UE.

An embodiment of the present disclosure provides an AMF, including: a first processor, a first memory, and a first communication bus.

The first communication bus is configured to realize a communication connection between the first processor and the first memory.

The first processor is configured to execute one or more computer programs stored in the first memory to implement a communication method applied to an AMF.

An embodiment of the present disclosure provides an SMF, including: a second processor, a second memory, and a second communication bus.

The second communication bus is configured to realize a communication connection between the second processor and the second memory.

The second processor is configured to execute one or more computer programs stored in the second memory to implement a communication method applied to the SMF.

An embodiment of the present disclosure provides a radio access network device, including: a third processor, a third memory, and a third communication bus.

The third communication bus is configured to realize a communication connection between the third processor and the third memory.

The third processor is configured to execute one or more computer programs stored in the third memory to implement a communication method applied to a radio access network device.

An embodiment of the present disclosure provides a computer-readable storage medium having a computer program stored thereon, and when the computer program is executed by a processor, the communication method described above is implemented.

An embodiment of the present disclosure provide a computer program product including a computer program that implements the above-described communication method when executed by a processor.

An embodiment of the present disclosure provides a communication method, a related apparatus, a storage medium, and a computer program product. The communication method applied to an access and mobility management function (AMF) includes: receiving downlink data size information corresponding to a quality of service flow transmitted by a session management function (SMF); and transmitting the downlink data size information to a radio access network device. The radio access network device is configured to determine, based on the downlink data size information, whether to activate a mobile terminated-small data transmission (MT-SDT) radio bearer, and/or whether to transmit a paging message carrying indication information for indicating the MT-SDT radio bearer to the UE. The technical solution provided by the embodiment of the present disclosure defines an implementation method in which the radio access network device obtains the downlink data size information corresponding to the quality of service flow from the AMF during a paging procedure triggered by the network side in the case of deactivated long eDRX to determine whether to activate the MT-SDT radio bearer and/or whether to indicate the MT-SDT radio bearer to the UE through a paging message. The flexibility and accuracy of MT-SDT radio bearer activation are improved, thus improving the data transmission effect.

### BRIEF DESCRIPTION OF THE DRAWINGS

FIG. 1 is a first schematic flowchart of a communication method according to an embodiment of the present disclosure.
FIG. 2 is a second schematic flowchart of a communication method according to an embodiment of the present disclosure.
FIG. 3 is a third schematic flowchart of a communication method according to an embodiment of the present disclosure.
FIG. 4 is a first exemplary communication interaction schematic diagram according to an embodiment of the present disclosure.
FIG. 5 is a second exemplary communication interaction schematic diagram according to an embodiment of the present disclosure.
FIG. 6 is a first schematic structural diagram of an AMF according to an embodiment of the present disclosure.
FIG. 7 is a second schematic structural diagram of an AMF according to an embodiment of the present disclosure.
FIG. 8 is a first schematic structural diagram of an SMF according to an embodiment of the present disclosure.
FIG. 9 is a second schematic structural diagram of an SMF according to an embodiment of the present disclosure.
FIG. 10 is a first schematic structural diagram of a radio access network device according to an embodiment of the present disclosure.
FIG. 11 is a second schematic structural diagram of a radio access network device according to an embodiment of the present disclosure.

### DETAILED DESCRIPTION

In order to make the objects, technical solutions, and advantages of the present disclosure more clearly understood, the present disclosure will be described in further detail below with reference to the accompanying drawings and embodiments. It is to be understood that the specific embodiments described herein are merely for illustration of the present disclosure and are not intended to limit the present disclosure.

Hereinafter, the technical solutions of the present disclosure and how the technical solutions of the present disclosure solve the above-described technical problems will be specifically described in detail by way of embodiments and in conjunction with the accompanying drawings. The following embodiments may be combined with each other, and the same or similar concepts or processes may not be described in detail again in some embodiments.

In addition, the solutions described in the embodiments of the present disclosure may be arbitrarily combined as long as there is no conflict.

An embodiment of the present application provides a communication method, and an entity for performing the communication method includes an access and mobility management function (AMF), a session management function (SMF), or a radio access network device. In additional, a user plane function (UPF) is also involved.

The communication method according to the embodiment of the present disclosure mainly proposes that in the paging procedure triggered by the network side in the case of deactivated extended discontinuous reception (eDRX), when a radio access network device performs paging, downlink data size information corresponding to a quality of service flow is obtained from an AMF to determine whether to activate a downlink (i.e., mobile-terminated, MT) small data transmission (SDT) radio bearer, and/or whether to transmit a paging message carrying indication information for indicating the MT-SDT radio bearer to user equipment (UE). This will be described in detail below.

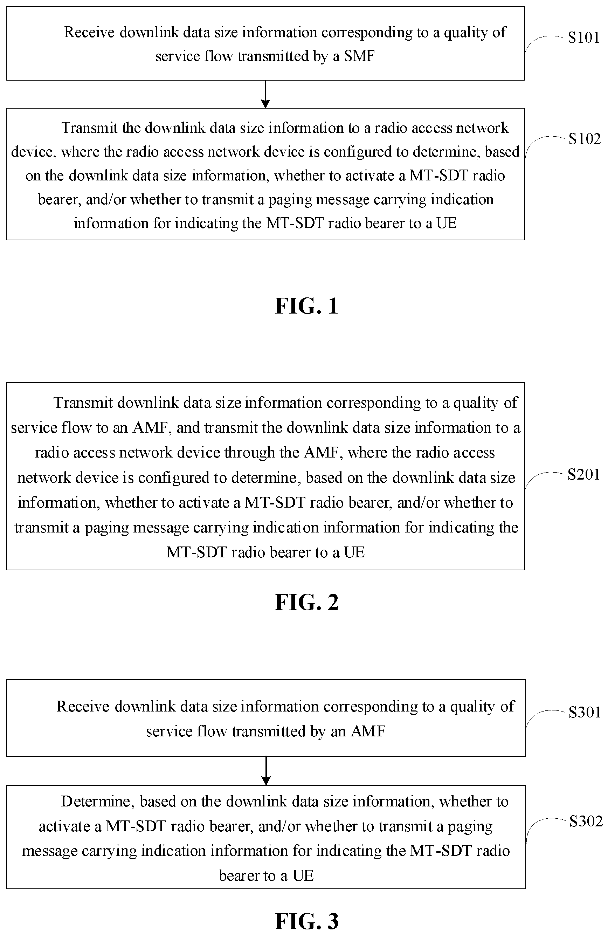

FIG. 1 is a first schematic flowchart of a communication method according to an embodiment of the present disclosure. As shown in FIG. 1, in the embodiment of the present disclosure, the communication method is applied to an AMF and mainly includes the following operations.

At S101, downlink data size information corresponding to a quality of service flow transmitted by a SMF is received.

In an embodiment of the present disclosure, the AMF receives downlink data size information corresponding to a quality of service (QoS) flow transmitted by the SMF.

It should be noted that in the embodiment of the present disclosure, a number of QoS flows may be multiple, and each QoS flow corresponds to one respective downlink data size information. The SMF may transmit downlink data size information corresponding to all QoS flows to the AMF, or may selectively transmit downlink data size information corresponding to a specific QoS flow to the AMF. A number of downlink data size information received by the AMF is not limited in the embodiment of the present disclosure.

It should be noted that in the embodiment of the present disclosure, the downlink data size information may be specifically information for indicating downlink data size, or may be the downlink data size, and the embodiment of the present disclosure is not limited.

In an embodiment of the present disclosure, the AMF may determine whether a UE is reachable, and select, according to whether the UE is reachable, an appropriate manner to cause the SMF to transmit the downlink data size information, thereby receiving the downlink data size information.

In an embodiment of the present disclosure, before receiving the downlink data size information transmitted by the SMF, the AMF may further perform the following operation: when the UE is unreachable, the AMF transmits a timer duration to the SMF based on an extended discontinuous reception (eDRX) parameter. The SMF is configured to obtain the downlink data size information and transmit it to the AMF when the timer expires.

It can be understood that in the embodiment of the present disclosure, when the UE is unreachable, the AMF transmits a timer duration, that is, a downlink data size reporting timer duration (i.e., a DL data size reporting timer) to the SMF, and indicates a time at which the SMF obtains and transmits the downlink data size information. The timer duration is determined based on the eDRX parameter, and the specific timer duration is not limited in the embodiment of the present disclosure.

It should be noted that, in the embodiment of the present disclosure, when or after the UE enters the RRC Inactive, a radio access network device transmits an N2 message to the AMF to instruct the AMF to perform downlink data signaling processing, and simultaneously provides the eDRX parameter to the AMF. After that, when there is downlink data or downlink signaling, the AMF may transmit, based on the eDRX parameter, an N2 message to trigger the radio access network device to perform paging when the UE is almost reachable.

In an embodiment of the present disclosure, before receiving the downlink data size information transmitted by the SMF, the AMF may further perform the following operation: requesting the downlink data size information from the SMF when the UE is reachable. The SMF is configured to obtain downlink data size information.

It can be understood that in the embodiment of the present disclosure, when the UE is unreachable, the AMF actively requests the downlink data size information from the SMF.

At S102, the downlink data size information is transmitted to the radio access network device. The radio access network device is configured to determine, based on the downlink data size information, whether to activate a MT-SDT radio bearer, and/or whether to transmit a paging message carrying indication information for indicating the MT-SDT radio bearer to the UE.

In an embodiment of the present disclosure, after receiving the downlink data size information, the AMF transmits the downlink data size information to the radio access network device.

In an embodiment of the present disclosure, the operation that the AMF transmits the downlink data size information to the radio access network device includes that: an N2 message carrying the downlink data size information is transmitted to the radio access network device.

In an embodiment of the present disclosure, the AMF may not only forward the downlink data size information to the radio access network device as described in S102, but also transmit a downlink data size threshold to the radio access network device, so that the radio access network device may be configured to determine, based on the downlink data size threshold and/or the downlink data size information, whether to activate the MT-SDT radio bearer, and/or whether to transmit a paging message carrying indication information for indicating the MT-SDT radio bearer to the UE.

It should be noted that in the embodiment of the present disclosure, the downlink data size threshold may be set according to actual requirements, protocol standards, and the like, and is not limited in the embodiment of the present disclosure.

FIG. 2 is a second schematic flowchart of a communication method according to an embodiment of the present disclosure. As shown in FIG. 2, in the embodiment of the present disclosure, the communication method is applied to a SMF and mainly includes the following operations.

At S201, downlink data size information corresponding to a quality of service flow is transmitted to an AMF, and the downlink data size information is transmitted to a radio access network device through the AMF. The radio access network device is configured to determine, based on the downlink data size information, whether to activate a MT-SDT radio bearer, and/or whether to transmit a paging message carrying indication information for indicating the MT-SDT radio bearer to a UE.

In an embodiment of the present disclosure, the SMF may transmit the downlink data size information corresponding to the QoS flow to the AMF, so as to transmit the downlink data size information to the radio access network device through the AMF.

It can be understood that in the embodiment of the present disclosure, the SMF may transmit the downlink data size information to the AMF, so that the AMF may receive the downlink data size information and transmit the downlink data size information to the radio access network device as described in the method on the AMF side.

In an embodiment of the present disclosure, the operation that the SMF transmits the downlink data size information to the AMF includes that: a timer duration transmitted by the AMF is received; and when a timer expires, the downlink data size information is obtained and transmitted to the AMF.

It can be understood that in the embodiment of the present disclosure, as described in the method on the AMF side, when the UE is unreachable, the AMF transmits the timer duration to the SMF. Based on this, the SMF may receive the timer duration and set the timer according to the received timer duration. When the timer expires, the downlink data size information is obtained and transmitted to the AMF.

In the embodiment of the present disclosure, the SMF may obtain the downlink data size information in any one of the following ways: counting/calculating, determining, or deriving.

In an embodiment of the present disclosure, the operation that the SMF transmits the downlink data size information to the AMF may further include that: the downlink data size information is obtained according to a request form the AMF, and the downlink data size information is transmitted to the AMF.

It can be understood that, in the embodiment of the present disclosure, as described in the method on the AMF side, when the UE is reachable, the AMF requests the downlink data size information from the SMF. Based on this, the SMF provides the downlink data size information to the AMF according to the request from the AMF.

It should be noted that in the embodiment of the present disclosure, the SMF may provide, according to the request from the AMF, the downlink data size information to the AMF in any one of the following ways: sending, reporting, replying, indicating, telling, or providing a feedback.

In an embodiment of the present disclosure, downlink data may be cached in the SMF or in the UPF. When the downlink data is cached in the SMF, the SMF determines the downlink data size information. When the downlink data is cached in the UPF, the SMF requests the downlink data size information from the UPF.

It should be noted that in the embodiment of the present disclosure, when the downlink data is cached in the UPF, the UPF may determine the downlink data size information according to the request from the SMF, and provide the downlink data size information to the SMF in any one of the following ways: sending, reporting, replying, indicating, telling, or providing a feedback.

FIG. 3 is a third schematic flowchart of a communication method according to an embodiment of the present disclosure. As shown in FIG. 3, in the embodiment of the present disclosure, the communication method is applied to a radio access network device and mainly includes the following operations.

At S301, downlink data size information corresponding to a quality of service flow transmitted by an AMF is received.

In an embodiment of the present disclosure, the radio access network device receives the downlink data size information corresponding to the QoS flow transmitted by the AMF.

It can be understood that in the embodiment of the present disclosure, as described in the method on the AMF side, the AMF transmits the downlink data size information corresponding to the QoS flow to the radio access network device. Correspondingly, the radio access network device receives the downlink data size information.

At S302, based on the downlink data size information, whether to activate a MT-SDT radio bearer is determined, and/or whether to transmit a paging message carrying indication information for indicating the MT-SDT radio bearer to the UE is determined.

In an embodiment of the present disclosure, based on the downlink data size information, the radio access network device may determine, according to a specific policy, rule, or the like, whether to activate the MT-SDT radio bearer, and/or whether to transmit a paging message carrying indication information to the UE, where the indication information indicates that the MT-SDT radio bearer. The specific policy and rule are not limited in the embodiments of the present disclosure.

In an embodiment of the present disclosure, as described in the method on the AMF side, the AMF may further transmit a downlink data size threshold to the radio access network device. Correspondingly, the radio access network device may receive the downlink data size threshold transmitted by the AMF. Based on this, the radio access network device may further determine, based on the downlink data size threshold and/or the downlink data size information, whether to activate a MT-SDT radio bearer, and/or whether to transmit a paging message carrying the indication information to the UE.

In the embodiments of the present disclosure, it can be seen from the above-described method steps executed by the AMF, SMF, and the radio access network device that the push of downlink data size information mainly involves two scenarios, one is that the SMF pushes the downlink data size information based on a timer, and the other is that the AMF actively requests the downlink data size information from the SMF. The interaction process between execution entities will be described in detail for the two scenarios.

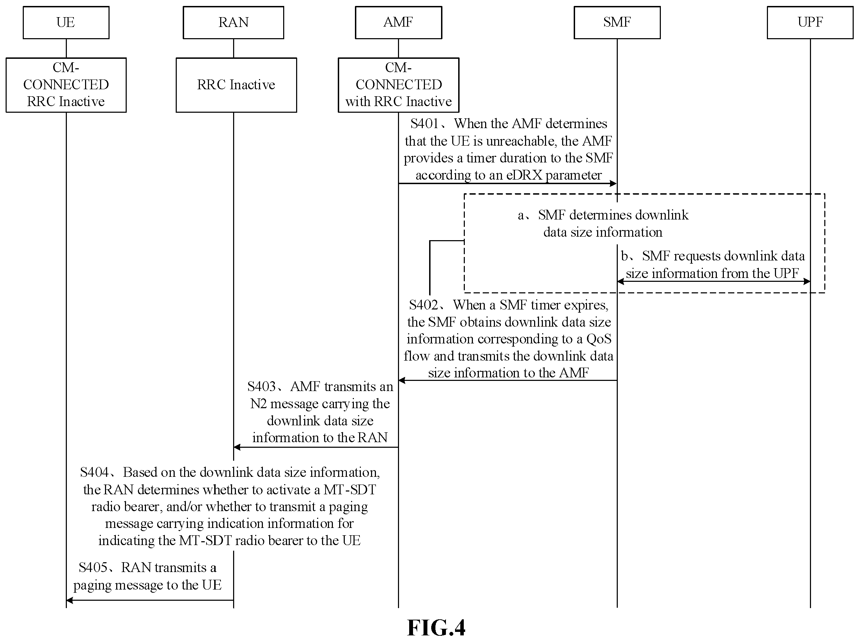

FIG. 4 is a first exemplary communication interaction schematic diagram according to an embodiment of the present disclosure. As shown in FIG. 4, in the embodiment of the present disclosure, in a scenario where a SMF pushes downlink data size information based on a timer, the following operations are mainly involved.

At S401, when an AMF determines that a UE is unreachable, the AMF provides a timer duration to the SMF according to an eDRX parameter.

It should be noted that when or after the UE enters RRC Inactive, a radio access network device (i.e., NG-RAN) transmits an N2 message to the AMF to instruct the AMF to perform downlink data signaling processing, and simultaneously provides the eDRX parameter to the AMF. After that, when there is downlink data or downlink signaling, based on the eDRX parameter, the AMF may send an N2 message to trigger the radio access network device to perform paging when the UE is almost reachable.

At S402, when a SMF timer expires, the SMF obtains the downlink data size information corresponding to the QoS flow and sends the downlink data size information to the AMF.

It should be noted that in the embodiment of the present disclosure, if downlink data is cached in the SMF, operation 'a' is executed: the SMF determines the downlink data size information; if the downlink data is cached in the UPF, operation 'b' is executed: the SMF requests the downlink data size information from the UPF.

At S403, the AMF sends an N2 message carrying the downlink data size information to the radio access network device.

It should be noted that in an embodiment of the present disclosure, the AMF may transmit downlink data size information corresponding to all QoS flows to the radio access network device, or may select to transmit downlink data size information corresponding to a specific QoS flow to the radio access network device.

It should be noted that, in an embodiment of the present disclosure, the AMF may further transmit a downlink data size threshold (for example, a maximum data size) to the radio access network device.

At S404, based on the downlink data size information, the radio access network device determines whether to activate a MT-SDT radio bearer, and/or whether to transmit a paging message carrying indication information for indicating the MT-SDT radio bearer to the UE.

It should be noted that in an embodiment of the present disclosure, when the radio access network device receives the downlink data size threshold transmitted by the AMF, it may further determine, based on the downlink data size information and/or the downlink data size threshold, whether to activate the MT-SDT radio bearer, and/or whether to transmit a paging message carrying indication information for indicating the MT-SDT radio bearer to the UE.

At S405, the radio access network device transmits a paging message to the UE, where the paging message may or may not carry indication information for indicating the MT-SDT radio bearer, depending on the determination result of operation S404.

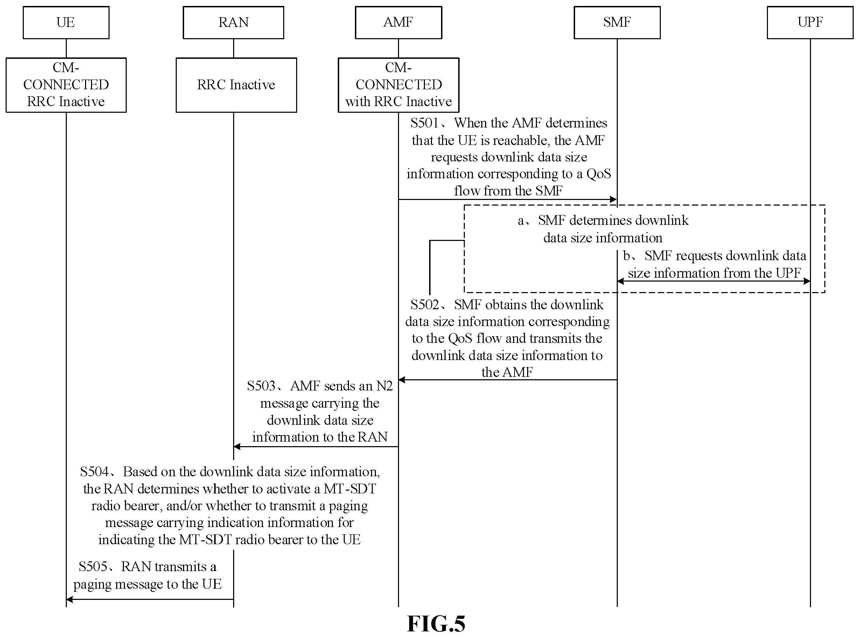

FIG. 5 is a second exemplary communication interaction schematic diagram according to an embodiment of the present disclosure. As shown in FIG. 5, in the embodiment of the present disclosure, in a scenario where an AMF actively requests downlink data size information from a SMF, the following operations are mainly involved.

At S501, when the AMF determines that a UE is reachable, the AMF requests downlink data size information corresponding to a QoS flow from the SMF.

At S502: the SMF obtains the downlink data size information corresponding to the QoS flow and transmits the downlink data size information to the AMF.

It should be noted that in the embodiment of the present disclosure, if downlink data is cached in the SMF, operation 'a' is executed: the SMF determines the downlink data size information; and if the downlink data is cached in the UPF, operation 'b' is executed: the SMF requests the downlink data size information from the UPF.

At S503, the AMF sends an N2 message carrying the downlink data size information to a radio access network device (i.e., NG-RAN).

It should be noted that in an embodiment of the present disclosure, the AMF may transmit downlink data size information corresponding to all QoS flows to the radio access network device, or may select to transmit downlink data size information corresponding to a specific QoS flow to the radio access network device.

At S504, based on the downlink data size information, the radio access network device determines whether to activate a MT-SDT radio bearer, and/or whether to transmit a paging message carrying indication information for indicating the MT-SDT radio bearer to the UE.

It should be noted that in an embodiment of the present disclosure, if the radio access network device receives a downlink data size threshold transmitted by the AMF, it may further determine, based on the downlink data size information and/or the downlink data size threshold, whether to activate the MT-SDT radio, and/or whether to transmit a paging message carrying indication information for indicating the MT-SDT radio bearer to the UE.

At S505, the radio access network device transmits a paging message to the UE, where the paging message may or may not carry indication information for indicating the MT-SDT radio bearer, depending on the determination result of operation S504.

Based on the above communication methods, the structures/configurations of the AMF, the SMF, and the radio access network device involved in the present disclosure will be described below.

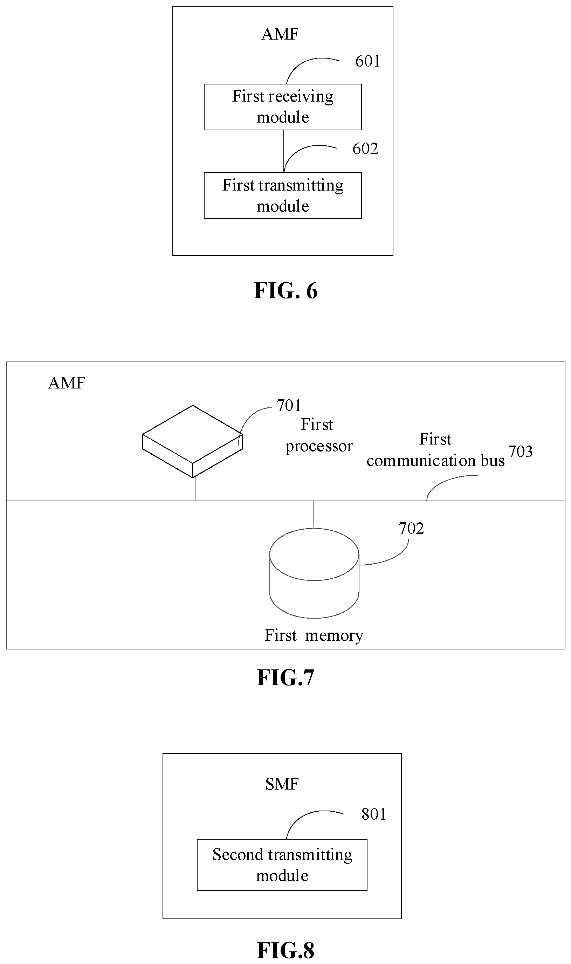

An embodiment of the present disclosure provides an AMF, and FIG. 6 is a first schematic structural diagram of the AMF provided by an embodiment of the present disclosure. As shown in FIG. 6, the AMF includes a first receiving module 601 and a first transmitting module 602.

The first receiving module 601 is configured to receive downlink data size information corresponding to a quality of service flow transmitted by a SMF.

The first transmitting module 602 is configured to transmit the downlink data size information to a radio access network device.

The radio access network device is configured to determine, based on the downlink data size information, whether to activate a mobile terminated-small data transmission (MT-SDT) radio bearer and/or whether to transmit a paging message carrying indication information for indicating an MT-SDT radio bearer to a UE.

In an embodiment of the present disclosure, the first transmitting module 602 is further configured to transmit a timer duration to the SMF based on an extended discontinuous reception (eDRX) parameter when the UE is unreachable. The SMF is configured to obtain the downlink data size information and transmit the downlink data size information to the AMF when a timer expires.

In an embodiment of the present disclosure, the first transmitting module 602 is further configured to request the downlink data size information from the SMF when the UE is reachable/accessible. The SMF is configured to obtain the downlink data size information.

In an embodiment of the present disclosure, the first transmitting module 602 is further configured to transmit an N2 message carrying the downlink data size information to the radio access network device.

In an embodiment of the present disclosure, the first transmitting module 602 is further configured to transmit a downlink data size threshold to the radio access network device.

The radio access network device is configured to determine, based on the downlink data size threshold and/or the downlink data size information, whether to activate an MT-SDT radio bearer, and/or determine whether to send the paging message to the UE.

FIG. 7 is a second schematic structural diagram of an AMF provided by an embodiment of the present disclosure. As shown in FIG. 7, the AMF includes: a first processor 701, a first memory 702, and a first communication bus 703.

The first communication bus 703 is configured to realize a communication connection between the first processor 701 and the first memory 702.

The first processor 701 is configured to execute one or more computer programs stored in the first memory 702 to implement a communication method applied to the AMF.

An embodiment of the present disclosure provides an SMF, and FIG. 8 is a first schematic structural diagram of the SMF provided by the embodiment of the present disclosure. As shown in FIG. 8, the SMF comprises a second transmitting module 801.

The second transmitting module 801 is configured to transmit downlink data size information corresponding to a quality of service flow to an AMF, and transmit the downlink data size information to a radio access network device through the AMF.

The radio access network device is configured to determine, based on the downlink data size information, whether to activate an MT-SDT radio bearer, and/or whether to send a paging message carrying indication information for indicating an MT-SDT radio bearer to a UE.

In an embodiment of the present disclosure, the SMF further includes a receiving module (not shown in the figure) configured to receive a timer duration transmitted by the AMF.

The second transmitting module 801 is further configured to obtain the downlink data size information when a timer expires, and transmit the downlink data size information to the AMF.

In an embodiment of the present disclosure, the second transmitting module 801 is further configured to obtain the downlink data size information according to a request from the AMF, and transmit the downlink data size information to the AMF.

In an embodiment of the present disclosure, the SMF further includes a processing module (not shown in the figure) configured to determine the downlink data size information when downlink data is cached in the SMF.

In an embodiment of the present disclosure, the second transmitting module 801 is further configured to request the downlink data size information from a user plane function (UPF) when downlink data is cached in the UPF.

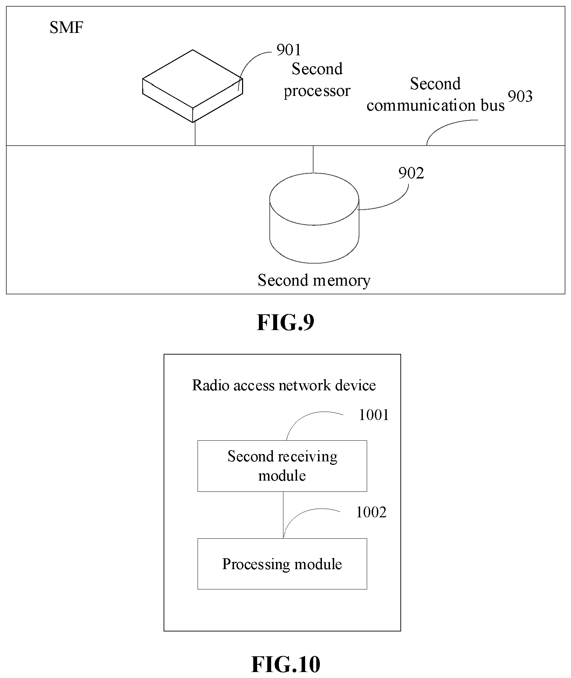

FIG. 9 is a second schematic structural diagram of an SMF according to an embodiment of the present disclosure. As shown in FIG. 9, the SMF includes: a second processor 901, a second memory 902, and a second communication bus 903.

The second communication bus 903 is configured to realize a communication connection between the second processor 901 and the second memory 902.

The second processor 901 is configured to execute one or more computer programs stored in the second memory 902 to implement a communication method applied to the SMF.

An embodiment of the present disclosure provides a radio access network device, and FIG. 10 is a first schematic structural diagram of the radio access network device provided by the embodiment of the present disclosure. As shown in FIG. 10, the radio access network device includes a second receiving module 1001 and a processing module 1002.

The second receiving module 1001 is configured to receive downlink data size information corresponding to a quality of service flow transmitted by an AMF.

The processing module 1002 is configured to determine, based on the downlink data size information, whether to activate a MT-SDT radio bearer, and/or whether to transmit a paging message carrying indication information for indicating the MT-SDT radio bearer to the UE.

In an embodiment of the present disclosure, the second receiving module 1001 is further configured to receive a downlink data size threshold transmitted by the AMF.

The processing module 1002 is further configured to determine, based on the downlink data size threshold and/or the downlink data size information, whether to activate an MT-SDT radio bearer and/or whether to transmit the paging message to the UE.

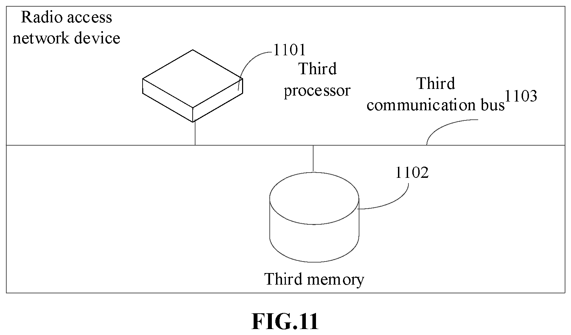

FIG. 11 is a second schematic structural diagram of a radio access network device according to an embodiment of the present disclosure. As shown in FIG. 11, the radio access network device includes a third processor 1101, a third memory 1102, and a third communication bus 1103.

The third communication bus 1103 is configured to realize a communication connection between the third processor 1101 and the third memory 1102.

The third process 1101 is configured to execute one or more computer programs stored in the third memory 1102 to implement a communication method applied to a radio access network device.

Embodiments of the present disclosure provide a computer program product including a computer program that implements the above-described communication method when executed by a processor.

Embodiments of the present disclosure provide a computer-readable storage medium having a computer program stored thereon, and when the computer program is executed by a processor, the communication method described above is realized. The computer-readable storage medium may be a volatile memory, such as a random access memory (RAM), or a non-volatile memory, such as a read-only memory (ROM), a flash memory, a hard disk drive (HDD) or a solid-state drive (SSD). It may also be a respective device including one or any combination of the memories described above, such as a mobile phone, a computer, a tablet device, a personal digital assistant, or the like.

It will be appreciated by those skilled in the art that embodiments of the present disclosure may be provided as methods, systems, or computer program products. Accordingly, the present disclosure may take the form of a hardware embodiment, a software embodiment, or an embodiment combining software and hardware aspects. Moreover, the present disclosure may take the form of a computer program product implemented on one or more computer-usable storage media (including, but is not limited to, magnetic disk storage, optical storage, and the like) containing computer-usable program code therein.

The present disclosure is described with reference to implementation flowcharts and/or block diagrams of methods, apparatus (systems), and computer program products according to embodiments of the present disclosure. It should be understood that each flow and/or block in the flowcharts and/or block diagrams, as well as combinations of the flow and/or blocks in the flowcharts and/or block diagrams, may be implemented by computer program instructions. These computer program instructions may be provided to a processor of a general purpose computer, a special purpose computer, an embedded processor, or another programmable data processing apparatus to produce a machine such that the instructions executed by the processor of the computer or another programmable data processing apparatus produce means for implementing the functions specified in implementing one or more processes of the flowchart and/or one or more blocks of the block diagram.

These computer program instructions may also be stored in a computer-readable memory capable of directing a computer or another programmable data processing apparatus to operate in a particular manner such that the instructions stored in the computer-readable memory produce an article of manufacture including instruction means for implementing the functions specified in implementing a flow or processes of the flowchart and/or a block or blocks of the block diagram.

These computer program instructions may also be loaded onto a computer or another programmable data processing apparatus such that a series of operational steps are performed on the computer or another programmable apparatus to produce a computer-implemented process, such that the instructions executing on the computer or another programmable apparatus provide steps for implementing the functions specified in implementing one or more processes of the flowchart and/or one or more blocks of the block diagram.

The above are only specific embodiments of the present disclosure, but the scope of protection of the present disclosure is not limited thereto, and any changes or substitutions that can be easily conceived by those skilled in the art within the technical scope disclosed in the present disclosure should be covered within the scope of protection of the present disclosure. Therefore, the scope of protection of the present disclosure should be subjected to the scope of protection of the claims.

## Claims

1. A method for communication, applied to an access and mobility management function (AMF), the method comprising:
receiving downlink data size information corresponding to a quality of service flow transmitted by a session management function (SMF); and
transmitting the downlink data size information to a radio access network device,
wherein the radio access network device is configured to determine, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

2. The method of claim 1, wherein before receiving the downlink data size information corresponding to the quality of service flow transmitted by the SMF, the method further comprises:
transmitting a timer duration to the SMF based on an extended discontinuous reception (eDRX) parameter when the UE is unreachable, wherein the SMF is configured to obtain the downlink data size information and transmit the downlink data size information to the AMF when a timer expires.

3. The method of claim 1, wherein before receiving the downlink data size information corresponding to the quality of service flow transmitted by the SMF, the method further comprises:
requesting the downlink data size information from the SMF when the UE is reachable, wherein the SMF is configured to obtain the downlink data size information.

4. The method of claim 1, wherein transmitting the downlink data size information corresponding to the quality of service flow to the radio access network device comprises:
transmitting an N2 message carrying the downlink data size information to the radio access network device.

5. The method of claim 1, further comprising:
transmitting a downlink data size threshold to the radio access network device,
wherein the radio access network device is further configured to determine, based on at least one of the downlink data size threshold or the downlink data size information, at least one of the following:
whether to activate the MT-SDT radio bearer; or
whether to transmit the paging message to the UE.

6. A method for communication, applied to a session management function (SMF), the method comprising:
transmitting downlink data size information corresponding to a quality of service flow to an access and mobility management function (AMF); and
transmitting the downlink data size information to a radio access network device through the AMF,
wherein the radio access network device is configured to determine, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

7. The method of claim 6, wherein transmitting the downlink data size information corresponding to the quality of service flow to the AMF comprises:
receiving a timer duration transmitted by the AMF; and
obtaining the downlink data size information and transmitting the downlink data size information to the AMF when a timer expires.

8. The method of claim 6, wherein transmitting the downlink data size information corresponding to the quality of service flow to the AMF comprises:
according to a request from the AMF, obtaining the downlink data size information and transmitting the downlink data size information to the AMF.

9. The method of claim 7 or 8, wherein obtaining the downlink data size information comprises:
when downlink data is cached in the SMF, determining, by the SMF, the downlink data size information.

10. The method of claim 7 or 8, wherein obtaining the downlink data size information comprises:
when downlink data is cached in a user plane function (UPF), requesting the downlink data size information from the UPF.

11. A method for communication, applied to a radio access network device, the method comprising:
receiving downlink data size information corresponding to a quality of service flow transmitted by an access and mobility management function (AMF); and
determining, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

12. The method of claim 11, further comprising:
receiving a downlink data size threshold transmitted by the AMF; and
determining, based on at least one of the downlink data size threshold or the downlink data size information, at least one of the following:
whether to activate the MT-SDT radio bearer; or
whether to transmit the paging message to the UE.

13. An access and mobility management function (AMF), comprising:
a first receiving module, configured to receive downlink data size information corresponding to a quality of service flow transmitted by a session management function (SMF); and
a first transmitting module, configured to transmit the downlink data size information to a radio access network device,
wherein the radio access network device is configured to determine, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

14. A session management function (SMF), comprising:
a second transmitting module, configured to transmit downlink data size information corresponding to a quality of service flow to an access and mobility management function (AMF), and transmit the downlink data size information to a radio access network device through the AMF,
wherein the radio access network device is configured to determine, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

15. A radio access network device, comprising:
a second receiving module, configured to receive downlink data size information corresponding to a quality of service flow transmitted by an access and mobility management function (AMF); and
a processing module, configured to determine, based on the downlink data size information, at least one of the following:
whether to activate a mobile terminated-small data transmission (MT-SDT) radio bearer; or
whether to transmit a paging message carrying indication information for indicating the MT-SDT radio bearer to user equipment (UE).

16. An access and mobility management function (AMF), comprising:
a first processor;
a first memory; and
a first communication bus configured to realize a communication connection between the first processor and the first memory,
wherein the first processor is configured to execute one or more computer programs stored in the first memory to implement the method for communication of any one of claims 1-5.

17. A session management function (SMF), comprising:
a second processor;
a second memory; and
a second communication bus configured to realize a communication connection between the second processor and the second memory,
wherein the second processor is configured to execute one or more computer programs stored in the second memory to implement the method for communication of any one of claims 6-10.

18. A radio access network device, comprising:
a third processor;
a third memory; and
a third communication bus configured to realize a communication connection between the third processor and the third memory,
wherein the third processor is configured to execute one or more computer programs stored in the third memory to implement the method for communication of any one of claims 11-12.

19. A computer-readable storage medium having stored thereon a computer program which, when executed by a processor, implements the method for communication of any one of claims 1 to 12.

20. A computer program product comprising a computer program that, when executed by a processor, implements the method for communication according to any one of claims 1 to 12.
